Europäisches Patentamt

European Patent Office

Office européen des brevets

(19)

(11) **EP 1 348 730 A1**

(12) **EUROPEAN PATENT APPLICATION**

(43) Date of publication:
01.10.2003 Bulletin 2003/40

(51) Int Cl.⁷: **C08K 3/22**

(21) Application number: **03006482.8**

(22) Date of filing: **21.03.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Starkovich, John A.**<br>**Redondo Beach, CA 90278 (US)** |
| (30) Priority: **29.03.2002 US 109828** | (74) Representative: **Schmidt, Steffen J., Dipl.-Ing.**<br>**Wuesthoff & Wuesthoff,**<br>**Patent- und Rechtsanwälte,**<br>**Schweigerstrasse 2**<br>**81541 München (DE)** |
| (71) Applicant: **TRW INC.**<br>**Redondo Beach, CA 90278 (US)** | |

(54) **Materials and method for improving dimensional stability of precision electronic optical photonic and spacecraft components**

(57) Composite materials of the invention contain a bulk resin and a filler material. The filler material is in the form of a particle having a particle size less than about 10 micrometers, preferably less than about 1 micrometer, and more preferably less than about 500 nanometers. The composite material is made of three phases - a bulk resin phase, a filler particle phase, and an interphase. The size and extent of the interphase is dependent on the amount and particle size of the filler material and the nature of the resin. The coefficient of thermal expansion or other property of the interphase region is intermediate between that of the bulk resin and the filler particles, and tend to be biased toward those of the filler particles. In a preferred embodiment, the filler material has a coefficient of thermal expansion lower than the coefficient of thermal expansion of the bulk resin.

EP 1 348 730 A1

**Description**

BACKGROUND OF THE INVENTION

1. Field of the Invention

The invention generally relates to advanced composite materials for electronic, optical, mechanical component and device applications. More specifically, the invention relates to composite materials with advanced properties that can be tailored for use in a variety of applications.

2. Discussion of the Related Art

Composite materials with enhanced or tailorable properties are needed for numerous electronic, optical, mechanical component and device applications. A typical requirement of such composite materials is that they operate under a variety of extreme temperature conditions. One challenge of extreme temperature conditions is to control the thermal expansion of materials and devices for use at those extremes. A particular challenge at extreme temperatures is to provide components that are in contact with each other that have matching coefficients of thermal expansion so that the device will be operable over a wide range of temperature.

Composite materials made up of a bulk resin and filler materials have been found to be useful in such applications. A common limitation of these materials is that they frequently require high concentrations of the filler materials in order to achieve an intended material property or component performance. Such highly loaded composite materials are often difficult to prepare.

Furthermore, while the particular property goal of such materials is often achieved by high loading of a filler, other performance characteristics important for the application are sometimes deleteriously affected. A problem or challenge is thus to find a means for achieving the property performance goal at lower filler concentrations.

A particular example involves the fabrication of electronic, optical, and mechanical components that are dimensionally stable over extended operating temperature ranges. For example, this may involve the use of adhesives, and structural components with low or tailored thermal expansion coefficient properties. A typical solution to such a challenge requires loading a high CTE (coefficient of thermal expansion) polymeric material with enough low CTE filler to achieve acceptable thermal expansion, but at low enough filler concentrations so that part fabrication cost, weight, strength, and other important properties are not adversely affected. In particular, materials with near zero thermal expansion are highly desirable, but not always possible to achieve owing to the generally high thermal expansion properties of polymers (with a CTE in the range of 30 - 500 ppm/K) and the normally limited CTE values (0-25 ppm/K) of most filler materials.

Another example of a challenging application involves preparation of high dielectric or permeable composite materials that are needed for areal-limited microelectronic devices such as integrated circuit chip capacitors, inductors, fiberoptic waveguides, and other micro devices as well as large and efficient space reflectors and antennas. Other examples include space structures, which are exposed to frequent cycles of high and low temperature as the structure passes from sun into shadow. Laser applications also generate challenging applications for composite materials. High power lasers generate a great deal of heat, presenting challenges to composite materials that must accommodate the changes in temperature. On the low temperature side, super conducting electronics are operated at temperatures approaching absolute zero. In such a challenging environment, materials must maintain low or matched thermal expansion properties at very low temperatures.

BRIEF SUMMARY OF THE INVENTION

Composite materials of the invention contain a bulk resin and a filler material. The filler material is in the form of a particle having a particle size less than about 10 micrometers. The composite material is made of three phases - a bulk resin phase, a filler particle phase, and an interphase. The size and extent of the interphase is dependent on the amount and particle size of the filler material and the nature of the resin. The coefficient of thermal expansion or other property of the interphase region is intermediate between that of the bulk resin and the filler particles, and tends to be biased toward those of the filler particles. In a preferred embodiment, the filler material has a coefficient of thermal expansion lower than the coefficient of thermal expansion of the bulk resin.

A method is also provided for formulating such composite materials by varying the amount and particle size of the filler material, when a composite material is desired having a targeted bulk physical property. The materials and method of the invention may be used to make multi-component system having components in contact, wherein the components in contact have matching physical properties. In a preferred embodiment, the components have matching coefficients of thermal expansion so that they are useful in a wide variety of high and low temperature applications.

BRIEF DESCRIPTION OF THE DRAWINGS

Figure 1 shows a ternary composition diagram and simulated photomicrographs for conventional and nanocomposite materials.

Figure 2 illustrates thermal expansion property comparisons for nano- and conventional composites.

Figure 3 illustrate a composite composition selection method based on particle separation and size factors.

Figure 4 is a contour diagram showing particle separation as function of particle size and composite volume fraction.

Figure 5 is a flow diagram illustrating a methodology for determining experimentally a physical property of the interphase region in composites of the invention.

DETAILED DESCRIPTION OF THE INVENTION

The composite materials of the invention contain a resin and a filler material. The filler material is provided in the form of particles wherein the particles have an average size less than or equal to about 10 micrometers. Preferably, the average size of the particles is less than about 1 micrometer and more preferably the average size of the particles is about 0.5 micrometers (500 nanometers) or less. In a preferred embodiment, the particles have an average size of about 200 nanometers or less. The particles of filler may also have a multimodal particle size distribution or mixture, where at least one of the particles has a size in the preferred range as noted. Such smaller sized particles may be combined with larger size particles to achieve desirable physical properties such as packing density or processing characteristics such as dispersibility, viscosity, and the like. The particles can take on a number of shapes, depending on the method of fabrication. In one embodiment, essentially spherical particles are produced. For spherical particles, the average size corresponds to the diameter of the spheres. For particles which are slightly oblate such as ovoids, and the like, the average size of the particle can be taken as the radius of a spherical particle having the same volume as the particle of interest. Other preferred particle shapes include those having a surface to volume ratio exceeding that of sphere wherein at least one dimension is submicrometer. For particles having one dimension significantly shorter than the other two, as for example, plates or disks, the average size of the particle can be expressed as the average thickness of the disk or plate. Similarly for particles having one dimension significantly longer than the other two such as fibers, the average particle size is conveniently expressed as the diameter of the elongated particle or fiber. As elaborated below, such formulated composites can exploit the high specific surface area and interfacial volume associated with nanometer dimension or textured surfaces for essentially generating a significant third constituent phase.

The resin of the invention can be generally selected from a wide variety of materials including thermosetting, thermoplastic, and elastomer polymers. Examples of thermosetting resins include, without limitation, epoxies, phenolics, thermoset polyesters, polycyanates, polyimides, ureas/melamines, polyurethanes, polyphenylenes, and polybenzimidazoles. Non-limiting examples of thermoplastic resins include acrylics, aramids, polyamides, polycarbonates, polyethylene/propylene, polystyrene, fluoroplastics, cellulose acetate, polyamideimides, polyaramides, polybutylene, polyether ketones, polyetherimides, thermoplastic polyesters, polyethylene terephtalate, polybutylene terephthalate, polymethylpentene, and polyvinyl chloride. Elastomers useful in the invention include, without limitation, butyl rubber, epichlorhydrin rubber, chlorinated sulfonated polyethylene, butadiene acrylonitrile rubber, polyisoprene, and silicone. For applications in the adhesives area, it is preferred to provide resins that are thermoplastic.

Likewise the filler can be selected form a variety of materials. Normally, a filler is used in a composite material to provide desirable properties in the composite material. Usually the use of a filler in a composite material provides the composite material with properties that can otherwise not be achieved. Examples of properties to be enhanced by the use of fillers include without limitation, tensile modulus, scratch and indentation hardness, stiffness, toughness, thermal expansion, strength, thermal distortion, moisture absorption reduction, permeability reduction, radiation resistance, flammability, and thermal conductivity.

In a preferred embodiment, the composite materials of the invention are formulated for the property of coefficient of thermal expansion. In this case, the resin typically has a relatively higher coefficient of thermal expansion, and the filler material has a relatively lower coefficient of thermal expansion. In a preferred embodiment, the filler material has a negative thermal coefficient of expansion so that in principle, composites with coefficient of thermal expansion of zero or less can be formulated. A particularly preferred filler having a negative coefficient of thermal expansion consists of the zirconium tungstate filler as described in Sleight, *et al.*, US Patent 5,514,360, the disclosure of which is incorporated by reference. Other non-limiting examples of materials with low or negative coefficients of thermal expansion useful in the invention include amorphous $SiO_2$, Faujasite $SiO_2$, $LiAlSiO_4$, β-eucryptite, $PbTiO_3$, $ScW_8O_{12}$, $Lu_2W_3O_{12}$, $ZrW_2O_8$, $HfW_2O_8$, $Zr_xHf_{1-x}W_2O_8$ where 0 < x < 1, $AlPO_4$, cordierite ($Mg_2Al_4Si_5O_{18}$), Zerodur, Invar ($FeNi_{36}$) and $NaZrP_3O_{12}$. Organic aramide polymers such as those known commercially as Kevlar® and Nomex® and poly(p-phenylenebenzobisoxazole), known commercially as Zylon®, also have very low coefficients of thermal expansion and are useful in the invention.

A key to practicing the current invention is to provide the filler materials in particulate form having average size less than about 10 micrometers, preferably less than about 1 micrometer, and most preferably less than or equal about 500 nanometers. Evan more preferred are particles sizes of less than or equal about 200 nm. In examples of preferred embodiments, particles are used having dimension of 100 nm or less, and even more preferably 50 nm or less. Particles having average sizes in those ranges can be prepared by a number of known techniques. Examples of such techniques include sol gel synthesis, colloidal precipitation, vapor condensation, spray pyrolysis, pyrogenic vapor phase reaction/combustion, solution polymerization, electrospinning, chemical etching/dissolution, grinding/milling, impaction, explosive decomposition, electrical arc, and the like.

As noted above, the composite materials of the invention exhibit desirable physical properties at relatively low levels of loading of the filler material. It is believed that the high specific surface area of the small sized particles and the interfacial volume associated with such nanometer sized particles generates a significant third constituent phase in the two component mixture. It is believed that the altered chemical potential, density, orientation, structure, and other physical and mechanical properties of the matrix material in the third constituent phase provide properties similar to the filler material rather than to the bulk matrix. This is consistent with a recent observation of Downing *et al.*, Journal Adhesion Sci. Technol. Vol. 14, No. 14, pages 1801 - 1812 (2000). Downing *et al.* studied a composite material made of a commercial polymer and a filler material made of 25 micrometer diameter glass fibers. By phase imaging atomic force microscopy, Downing et al. probed the interphase region to measure its stiffness relative to the bulk phase. By microindentation measurements, they observed that the modulus in the interphase next to the fiber approached that of the fiber, and decreased to that of the bulk polymer as the distance away from the fiber increased.

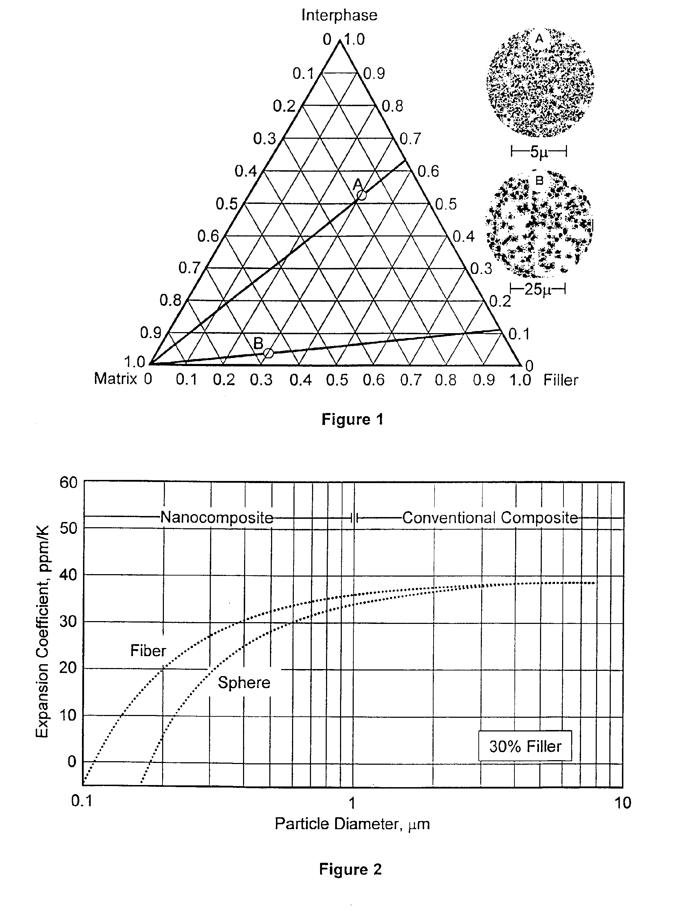

Composites are conventionally treated as two component mixtures and their properties modeled by various rule of mixture equations involving only filler and matrix volume fractions. For composites having filler particles of greater than about 10 micrometers, such a rule of mixture equation is acceptable since the interfacial layer thickness or interphase volume is negligible compared to that of the filler. For composite materials filled by particles having dimensions on the order of 10 micrometers or less, and preferably 500 nanometers or less, the situation is different. A ternary composition diagram is given in Figure 1 for an idealized non-interfering sphere model of core-shell geometry. Figure 1 compares the constituent volume fractions for variably loaded conventional composites and composites containing the nanodimensional particles of the invention. A 2 micrometer (2000 nanometer) diameter spherical filler particle is used in the conventional composite (illustrated as A in Figure 1) and a 200 nanometer particle is used in the nanocomposite (illustrated as B in Figure 1). The interfacial shell layer thickness for each composite is assumed to be a 1 molecule thick layer of a typical organic polymer such as polyethylene or polystyrene. For polyethylene (molecular weight 100,000) or polystyrene (molecular weight 1,000,000) this thickness is approximately 40 nanometers. As indicated in Figure 1, a 30% filled nanocomposite contains over 55% interphase material while the conventional composite contains less than 5%. Stated another way, the nanocomposite consists of greater than 85% filler and interphase, and less than 15% bulk phase polymer. The similarly loaded conventional composite contains less than 35% of filler/interphase and over 65% bulk phase matrix polymer.

The effect of the existence of a third phase (the interphase described above) that has a physical property close to that of the filler material is illustrated in Figure 2. Figure 2 shows the effect of filler particle diameter on the expansion coefficient of a composite material containing the filler. The composite material of Figure 2 contains 70% by volume of a polymer matrix material having a coefficient of thermal of expansion of +60 ppm/$^\circ$K and 30% of zirconium tungstate (CTE of -10 ppm/$^\circ$K). For the purpose of calculating Figure 2, the interphase layer thickness is assumed to be 40 nanometers and to have a coefficient of thermal expansion half of the value of the bulk phase zirconium tungstate. Composite coefficient of thermal expansion values are computed using a simple linear 3 constituent (filler-interphase-polymer) rule of mixtures model. At a limiting particle diameter of about 10 micrometers, it is observed that the 30% Zr-tungstate filled composite has a coefficient of thermal expansion of about 38. This can be thought of as the result of a rule of mixtures calculation based on a composite material having only two phases, that is a bulk resin phase and a filler particle phase. According to the model, as particle size of the filler decreases, the volume of the interphase increases. Once the particle diameter reaches 1 micrometer, it is clear from Figure 2 that the coefficient of thermal expansion of the composite material is reduced below that which would be predicted from a simple rule of mixtures calculation based on two phases. As the particle diameter decreases even further, a point is reached in Figure 2 where the coefficient of thermal expansion of the composite material comprising 30% of the filler reaches a value of 0. It can be seen generally from Figure 2 that with a given amount of filler, the expansion coefficient of the resulting composite material can be varied depending on the average size of the particles used.

As noted above, the size of the interphase region is dependent on the surface area of the filler particles, around which it is believed that the molecules of the matrix material orient. It is known that a sphere has the greatest ratio of particle volume to surface area. Therefore it would be expected that particles in the shape of a sphere would have a greater effect on the expansion coefficient of the composite material than other particles. This is observed in Figure 2 where a expansion coefficient in the composite material of 0 is reached with spheres of particle diameter of about 180 nanometers whereas for fibers the particle diameter needs to be on the order of 100 nanometers in order to reach an expansion coefficient of 0 in the composite material.

Figure 2 illustrates the ternary phase model of composite materials containing filler particles of diameter or average size less than about 10 micrometers. The amount of interphase in the composite material is calculated as a function of the amount of filler and the diameter of the particles. Thereafter, a value of the coefficient of thermal expansion of the interphase region is determined, either by estimate as illustrated in Figure 2, or by experimental determination as described below. Given the value of coefficient of thermal expansion of the matrix material, the filler particles, and the interphase region as determined above, a rule of mixtures calculation may be made to determine the coefficient of thermal expansion of the resulting composite material.

The method of the invention exploits the ternary phase theory to provide a method for formulating a composite with a desired physical or mechanical property. According to the method a composite composition is selected for achieving a desired composite property by adjusting and or maximizing the contributions of the filler particle and its associated interphase for determining the overall composite property. In this manner the concentration of the filler and interphase are maximized and the contribution from unbound or free polymer resin is minimized.

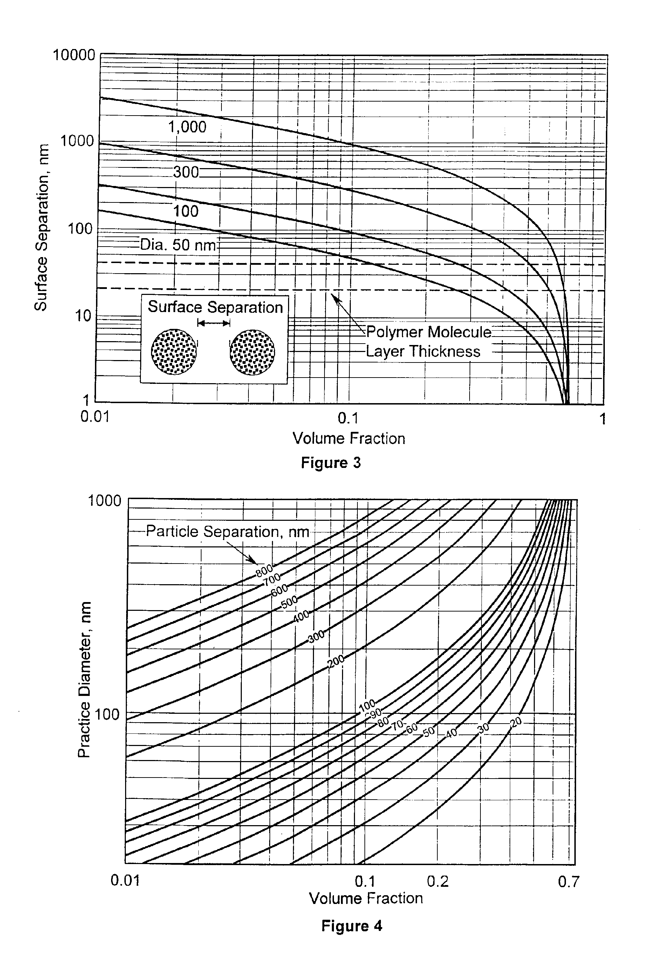

Selection of filler particle size and volume fraction for making a composite by this method is illustrated in Figures 3 and 4. Estimated in these figures is the surface separation distance as a function of filler particle volume fraction for different mono-size diameter spheres arranged in a hexagonal-close-pack (HCP) structure. Also indicated in Figure 3 is the range of polymer molecule layer thicknesses that may be expected for a typical linear type polymer. As may be seen from Figures 3 and 4, composites with smaller particles require lower volume fractions for attaining monomolecular polymer separation distance than composites using larger size particles. For this model 50 nm diameter particles are seen to require particle volume fractions of only approximately 0.12 to 0.29, while composites with 300 nm size particles require volume fractions of 0.5 to 0.6 to achieve the same separation. Preparation of such highly loaded composites is problematic and often unobtainable owing to rapidly increasing or excessive viscosity for composites in this composition region. The contour diagram of Figure 4 provides a wider selection of particle separations for accommodating polymers with different interphase layer thicknesses. Composite properties for the ternary system may be estimated using a rule-of-mixtures model employing three constituent terms as shown in Equation 1, instead of the normal two-term expression.

$$(1) \qquad I_{composite} = I_{filler} \times \phi_{filler} + I_{interphase} \times \phi_{interphase} + I_{polymer} \times (1 - \phi_{filler} - \phi_{interphase})$$

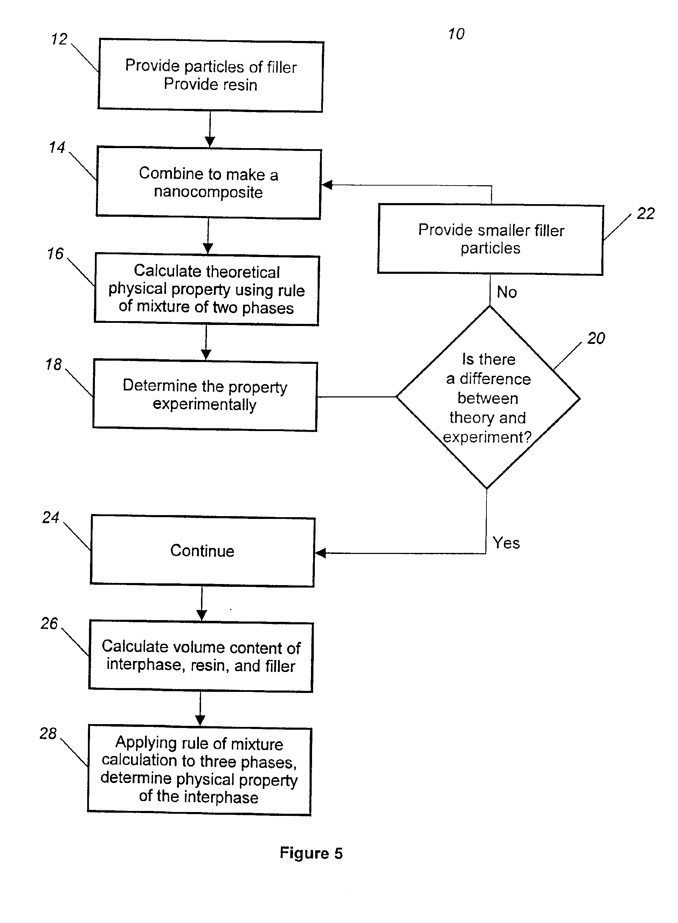

where $I$ is the material property value such as CTE, elastic modulus, etc., and $\phi$ is the constituent volume fraction. Use of Equation 1 for predicting nanocomposite properties depends on experimental data and/or suitable theoretical models for estimating interphase property values. Interphase values may be determined experimentally by using a method illustrated in Figure 5. Alternatively, an average or weighted-average value for an interphase property may be used in Equation 1 where the interphase value is taken as an average between the filler and resin property material value.

As noted above, it is possible to estimate a physical property of an interphase region by taking an average of the physical properties of the resin and the filler, or by assuming that the physical property of the interphase region more closely approaches that of the filler than that of the resin. A physical property of an interphase region may also be determined experimentally by a protocol such as that described in Figure 5. Figure 5 presents a methodology **10** for determining the physical property of an interphase region in a composite material. In box **12**, the process starts by providing particles of the filler and providing a resin and moves to box **14** where the filler particles and the resin are combined to form a nanocomposite. Thereafter, a theoretical property for the nanocomposite can be calculated, as shown in box **16,** by using the rule of mixture with the two phases comprised of filler particles and resin. That is, the physical property (for example, coefficient of thermal expansion) of the filler particles is known as is that of the resin. From the physical properties of the two phases and the relative volume or weight fractions of the two phases the theoretical physical property of the composite may be calculated algebraically. The physical property of the composite may also be determined experimentally as shown in box **18.** Usually experimental determination of the property is straightforward. For example, in the case of coefficient of thermal expansion, it suffices to apply cold or warm temperature to the composite article and measure the thermal expansion resulting upon the heating or cooling. Next, the protocol of Figure 5 calls for going to a decision box **20** where it is determined whether there is any difference between the property observed experimentally in box 18 and the property calculated theoretically in box **16.** If there is no difference, the protocol calls for going to box **22** where the experiment is repeated again with smaller filler particles. It can be seen that in principle the loop consisting of boxes **14**, **16**, **18**, **20** and **22** may be repeated until a difference between theory and experiment is observed. Once a difference between theory and experiment is in fact observed, the protocol calls for continuing in box **24** and proceeding to box **26** where the volume content of the resin, filler, and interphase region are calculated as a function of the weight of filler used, the density of the filler and the resin, and the particle size of the filler, such as is illustrated in Figures 3 and 4.

At the end of box **26**, the left side of Equation 1 as well as five of the six variables on the right side of Equation 1 are known, with only the physical property of the interphase still to be determined. Accordingly, in box **28** a rule of mixtures calculation is applied and the physical property of the interphase - shown in Equation 1 as $I_{interphase}$ - is determined algebraically.

Once the physical property of the interphase is known, the value may be used to formulate composite materials having targeted values of a desired bulk physical property. In such a method first a resin is provided that has a first value of the desired bulk physical property. Next particles of a filler material are provided that have a second value of the desired physical property. The filler particles are characterized by a particle size. As noted above, the particle size distribution may be monomodal or multimodal. In a preferred embodiment, the particle size distribution is multimodal, with at least one of the particles having a particle size on the order of 10 micrometers or less. Next, the value of the physical property of the interphase region is determined such as by the method of Figure 5. The method then calls for calculating the volume fraction of the interphase bulk resin and filler as a function of the particle size and the weight amount of bulk filler particles in the composite as well as known properties of the filler such as density. Thereafter the bulk physical properties of the composite are calculated from an algebraic combination of the physical properties of the bulk resin, the filler particles and the interphase as a function of the volume fraction in physical properties of the bulk, the filler and the interphase. Finally, the composite material is formulated by combining the resin and filler particles to form the composite. The particle size and the amount of filler are chosen from the results of the calculation noted above and described in for example, Figure 5 and Figure 3 so as to provide a composite having the desired physical property. In a preferred embodiment, the physical property is coefficient of thermal expansion, and the nanocomposite material thus formulated has useful properties of thermal expansion. For example, it may be useful to formulate composites having a very low coefficient of thermal expansion, so that for example they may withstand extreme temperatures without changing volume or linear dimension. Alternatively, the composites may be formulated to match the coefficient of thermal expansion of other materials to which the composite will be attached in a multi-component system. For example, it is desirable to formulate adhesives so that the coefficient of thermal expansion of adhesive matches that of the materials that are being bonded by the adhesive.

While preferred embodiments of the invention have been described, it is not intended to limit the scope of coverage of the invention except as stated in the appended claims.

## Claims

1. A composite material comprising
   a bulk resin having a first value of coefficient of a physical property and
   a filler material having a second value of a physical property in the form of particles having a particle size less than about 10 micrometers.

2. A composite material according to claim 1, wherein the particle is less than about 1 micrometer.

3. A composite material according to claim 1, wherein the particle size is less than or equal to about 500 nanometers.

4. A composite material according to claim 1, wherein the particle size is less than or equal to about 200 nanometers.

5. A composite material according to claim 1, wherein the filler material has a coefficient of thermal expansion less than or equal to 0.

6. A composite material according to claim 1, where the filler material is selected from the group consisting of amorphous $SiO_2$, Faujasite $SiO_2$, $LiAlSiO_4$, $\beta$-eucryptite, $PbTiO_3$, $ScW_8O_{12}$, $Lu_2W_3O_{12}$, $ZrW_2O_8$, $HfW_2O_8$, $Zr_xHf_{1-x}W_2O_8$ where $0 < x < 1$, $AlPO_4$, cordierite ($Mg_2Al_4Si_5O_{18}$), Zerodur, Invar ($FeNi_{36}$), $NaZrP_3O_{12}$ Kevlar®, Nomex®, Zylon® and combinations thereof.

7. A composite material according to claim 5, wherein the filler material comprises zirconium tungstate.

8. A composite material according to claim 7, wherein the zirconium tungstate particles have an average size less than or equal to about 1 micrometer.

9. A composite material according to claim 7, wherein the zirconium tungstate particles have an average size less than or equal to about 0.5 micrometers.

Figure 1

Figure 2

**Figure 3**

**Figure 4**

*12* — Provide particles of filler
Provide resin

*10*

*14* — Combine to make a nanocomposite

*22* — Provide smaller filler particles

*16* — Calculate theoretical physical property using rule of mixture of two phases

No

*18* — Determine the property experimentally

*20* — Is there a difference between theory and experiment?

*24* — Continue

Yes

*26* — Calculate volume content of interphase, resin, and filler

*28* — Applying rule of mixture calculation to three phases, determine physical property of the interphase

**Figure 5**

**European Patent Office**

## EUROPEAN SEARCH REPORT

Application Number

EP 03 00 6482

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 21272 A (HOLL RICHARD A) 22 May 1998 (1998-05-22) * abstract; claims 1-31 * * page 17, line 3-36 * * page 19, line 4-25 * * page 20, line 14-27 * * page 21, line 9-16 * * page 26, line 15-25 * --- | 1-9 | C08K3/22 |
| X | US 2001/021292 A1 (MERKEL GREGORY A) 13 September 2001 (2001-09-13) * abstract; claims 1-13 * * page 4, paragraph 44 * * page 4, paragraph 39 * * page 14, paragraph 108 * --- | 1,5-7 | |
| X | DE 197 51 542 A (SIEMENS AG) 29 July 1999 (1999-07-29) * abstract; claims 1-41 * * page 2, line 49 * * page 5, line 1-45 * ----- | 1-6 | TECHNICAL FIELDS SEARCHED (Int.Cl.7) C08K |

The present search report has been drawn up for all claims

| Place of search | Date of completion of the search | Examiner |
|---|---|---|
| THE HAGUE | 24 July 2003 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 348 730 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2003

| Patent document cited in search report | | Publication date | Patent family member(s) | | Publication date |
|---|---|---|---|---|---|
| WO 9821272 | A | 22-05-1998 | WO | 9821272 A2 | 22-05-1998 |
| US 2001021292 | A1 | 13-09-2001 | US | 6187700 B1 | 13-02-2001 |
| | | | AU | 6237399 A | 30-12-1999 |
| | | | CA | 2332811 A1 | 16-12-1999 |
| | | | CN | 1301240 T | 27-06-2001 |
| | | | EP | 1087915 A2 | 04-04-2001 |
| | | | JP | 2002517377 T | 18-06-2002 |
| | | | WO | 9964898 A2 | 16-12-1999 |
| | | | US | 2002019393 A1 | 14-02-2002 |
| DE 19751542 | A | 29-07-1999 | DE | 19751542 A1 | 29-07-1999 |
| | | | DE | 19758569 A1 | 28-10-1999 |
| | | | US | 6365269 B1 | 02-04-2002 |

EPO FORM P0459

For more details about this annex : see Official Journal of the European Patent Office, No. 12/82